(19) **Europäisches Patentamt**
**European Patent Office**
**Office européen des brevets**

(11) **EP 2 516 685 B1**

(12) **EUROPÄISCHE PATENTSCHRIFT**

(45) Veröffentlichungstag und Bekanntmachung des Hinweises auf die Patenterteilung:
**16.05.2018   Patentblatt 2018/20**

(21) Anmeldenummer: **10801401.0**

(22) Anmeldetag: **14.12.2010**

(51) Int Cl.:
*C21C 5/30* (2006.01)         *C21C 5/46* (2006.01)
*F27D 19/00* (2006.01)

(86) Internationale Anmeldenummer:
**PCT/EP2010/069599**

(87) Internationale Veröffentlichungsnummer:
**WO 2011/076615 (30.06.2011 Gazette 2011/26)**

(54) **STEUERUNG DES KONVERTERPROZESSES DURCH ABGASSIGNALE**

CONTROL OF THE CONVERTER PROCESS BY MEANS OF EXHAUST GAS SIGNALS

COMMANDE DU PROCESSUS SE PRODUISANT DANS LE CONVERTISSEUR SUR LA BASE DE SIGNAUX ISSUS DES GAZ PERDUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009   DE 102009060258**

(43) Veröffentlichungstag der Anmeldung:
**31.10.2012   Patentblatt 2012/44**

(73) Patentinhaber: **SMS group GmbH**
**40237 Düsseldorf (DE)**

(72) Erfinder: **REICHEL, Johann**
**40489 Düsseldorf (DE)**

(74) Vertreter: **Klüppel, Walter et al**
**Hemmerich & Kollegen**
**Patentanwälte**
**Hammerstraße 2**
**57072 Siegen (DE)**

(56) Entgegenhaltungen:
**EP-A2- 0 572 848     DE-A1- 2 839 316**

- **KOEHLE S ET AL: "BEOBACHTUNG DES ENTKOHLUNGSPROZESSES ANHAND VON ABGASMESSUNGEN", STAHL UND EISEN, VERLAG STAHLEISEN, DUSSELDORF, DE, Bd. 113, Nr. 6, 14. Juni 1993 (1993-06-14) , Seiten 55-60, XP000369701, ISSN: 0340-4803 in der Anmeldung erwähnt**
- **MEHRA R K ET AL: "Dynamic modeling and estimation of carbon in a basic oxygen furnace", PREPRINTS OF THE 3RD IFAC/IFIP CONFERENCE ON DIGITAL COMPUTER APPLICATIONS TO PROCESS CONTROL INSTRUMENT SOC. AMERICA PITTSBURGH, PA, USA, Bd. I, 1971, Seite 7 pp., XP002643306,**

EP 2 516 685 B1

**Beschreibung**

Die Erfindung betrifft ein Verfahren zur dynamischen Steuerung des Konverterprozesses beim Verblasen des Sauerstoffs bei der Stahlherstellung mittels Abgasanalysen.

Moderne Stahlherstellungsprozesse erfordern die genaue Kenntnis der aktuellen Zusammensetzung und der Temperatur des zu behandelnden Flüssigmetalls. Insbesondere während der Stahlherstellung im Konverter sind hohe Trefferraten beim Kohlenstoff-Endgehalt und der Badtemperatur erforderlich. Ein mengenmäßig präzises Verblasen des Sauerstoffs entsprechend dem endgültigen Ziel-Kohlenstoffgehalt sowie die Metalltemperatur sind entscheidende Faktoren, die die Wirtschaftlichkeit des Prozesses sowie die Qualität des erzeugten Stahls beeinflussen.

Um eine relativ genaue Prozessverfolgung zu ermöglichen, sind unterschiedliche Abläufe und Prozesse bekannt, die in ihrer Anwendung mehrheitlich auf die Messung der Abgaszusammensetzung und auf Massenbilanzen beruhen. Alle Modelle arbeiten mit einer von der Genauigkeit der Eingabedaten abhängigen Exaktheit, insbesondere bezüglich der Wiegedaten der Einsatzstoffe und der chemischen Beschaffenheit des eingesetzten Metalls.

Aus der DE 28 39 316 A1 ist ein Verfahren zur Steuerung eines Stahlherstellungsverfahrens bekannt, bei welchem die Entkohlung des geschmolzenen Stahls unter atmosphärischem Druck und unter Bildung eines Abgases geschieht, welches CO, $CO_2$ und $N_2$ aufweist, gekennzeichnet durch folgende Schritte: Bildung einer innigen Gasmischung aus dem Abgas und einer gemessenen Menge an Bezugsgas, welches inert bezüglich des Abgases ist, massenspektrometrische Überwachung einer Probe der innigen Mischung auf die Ionisationsströme für ausgewählte Peaks betreffend das CO, $CO_2$, $N_2$ und das Bezugsgas in der Probe, Bestimmung der Rate oder der Größe der Entkohlung des geschmolzenen Stahls zur Zeit der Überwachung aus dem gemessenen Wert der Menge des Bezugsgases in der Mischung und der gemessenen Werte der Ionisationsströme für die ausgewählten Peaks, und Steuerung des Stahlherstellungsverfahrens entsprechend dem bestimmten Wert der Rate oder Größe der Entkohlung des geschmolzenen Stahls.

Die WO 2008/049673 A1 beschreibt ein Verfahren zur Regelung des CO-Austrags bei der Stahlerzeugung, bei dem einer Schmelze zur Entfernung von enthaltenem Kohlenstoff (C) Sauerstoff ($O_2$) zugeführt wird, der Istwert des aus der Schmelze entweichenden Kohlenstoffstroms ermittelt wird, der sich aus der zugeführten Sauerstoffmenge und dem Kohlenstoffgehalt der Schmelze unter Berücksichtigung etwaiger sonstiger Reaktionen ergebende Sollwert des entweichenden Kohlenstoffstroms berechnet wird, Soll- und Istwert miteinander verglichen werden und im Falle eines Zurückbleibens des Istwertes gegenüber dem Sollwert Maßnahmen zur Verhinderung eines schlagartigen Aufstiegs von Gasblasen eingeleitet werden. Als geeignete Maßnahmen werden genannt:

- Steuerung der Sauerstoffzufuhr zur Schmelze und gegebenenfalls Reduzierung der Sauerstoffzufuhr,
- Zuführung von Kohlenstoff zur Schmelze.

Ein aus der WO 2009/030192 A1 bekanntes Verfahren zur indirekten Bestimmung der Abgasrate bei metallurgischen Prozessen ist dadurch gekennzeichnet, dass dem Abgas zunächst ein Referenzgas, wie Helium zugesetzt wird, und zwar zu einem Zeitpunkt, der strömungsmäßig soweit vor der Probennahme liegt, dass eine gründliche Durchmischung des Referenzgases und des Abgases erfolgt, also quasi eine homogene Verteilung erreicht wird, und dass dann eine quantitative Helium- und Stickstoffanalyse des Abgases, gemessen mit einem Massenspektrometer unter Berücksichtigung der zugesetzten Heliummenge erfolgt mit folgenden Einzelbestimmungen: $O_2$, CO, $CO_2$, $N_2$, Ar, He, $H_2$.

Wie in einem Aufsatz in "Stahl u Eisen 113 (1993) Nr. 6, Seite 55 bis 60, Beobachtung des Entkohlungsprozesses anhand von Abgasmessungen" unter anderem ausgeführt, wurde am LD-Konverter bereits vor mehr als 20 Jahren begonnen, die im Abgas enthaltene Information über den Entkohlungsprozess zu nutzen. Zur Prozesssteuerung von Sauerstoffblasverfahren wurden bis 1980 für 9 von 17 in einer Übersicht genannten Blasstahlwerken eine Abgasmessung angegeben und eine erhöhte Treffsicherheit von 85 % bis 95 % für eine Spanne des Kohlenstoffgehalts von $\pm$ 0,020 % genannt. Dies entspricht einer Standardabweichung des Fehlers von etwa 0,014 % bis 0,010 %. inzwischen ist die Abgasmessung, wie weiter ausgeführt wird, - teils mit Massenspektrometer, teils mit Einzelgeräten zu einem festen Bestandteil der meisten Prozessführungssysteme für LD-Konverter und die daraus abgeleiteten Sauerstoffblasverfahren geworden. Ergänzend zu dem sogenannten "Statischen Modell" für die Vorausberechnung des Prozesses ermöglicht die Abgasmessung zusammen mit der Sublanze in einem sogenannten "Dynamischen Modell" die kontinuierliche Beobachtung und Steuerung des Prozesses. Die vor dem Behandlungsende abnehmende Entkohlungsgeschwindigkeit zeigt an, wann eine Sublanzenmessung vorzunehmen ist, um mit dieser Positionsbestimmung nicht nur den Kohlenstoffgehalt, sondern auch die Temperatur sicher zu treffen. Die auf der Sauerstoffbilanz aufbauende Berechnung der Verschlackung von Eisen, Mangan, Phosphor und Schwefel kann die Badzusammensetzung so genau bestimmen, dass die meisten Schmelzen direkt abgestochen und legiert werden können, ohne eine Kontrollprobe zu nehmen und deren Analyse abzuwarten. Aus der EP572848 ist ein Verfahren zur Bestimmung des Endpunktes für einen Frischprozeß in Sauerstoffkonvertern bei der Stahlerzeugung, bei dem während des Frischens fortlaufend aus dem Konverter entweichende Abgasbestandteile analysiert werden, bekannt, wobei die zeitlichen Änderungen der massenspektrometrisch analysierten Abgasbestandteile und/oder daraus abgeleiteter Parameter mit Hilfe eines Rechnerprogramms fortlaufend mit einer Sollkurve verglichen werden, und nachdem über eine bestimmte Anzahl von hintereinander liegenden Meßwerten die vorgegebenen Bedingungen vom Rechner als erfüllt erkannt worden sind, die Sauerstoffzufuhr beendet wird. Ausgehend von diesem geschilderten Stand der Technik besteht die Aufgabe der Erfindung darin, ein Verfahren anzugeben, das mittels Abgasanalysen eine vom vorgegebenen Prozessmodell unabhängige dynamische Steuerung des Konverterprozesses zur Stahlherstellung ermöglicht, insbesondere beim Verblasen des Sauerstoffs.

Die gestellte Aufgabe wird mit den kennzeichnenden Merkmalen des Anspruchs 1 dadurch gelöst, dass mit Hilfe eines vom Prozessmodell unabhängigen Submodells, das auf der Abgasanalyse basierend als Prozessbeobachter arbeitet, wobei das Prozessmodell und das Submodell Bestandteil eines Regelkreises sind, durch eine sinnvolle Kombination der erhaltenen Bestandteilssignale Erfassungswerte für den kritischen Entkohlungszeitpunkt ($t'_{crit}$) und für das $O_2$-Blasende ($t'_{EoB}$) berechnet werden, durch die der durch das Prozessmodell vorausberechnete Sauerstoffgehalt zu Prozessbeginn korrigiert und auf die tatsächlichen Bedingungen gegen Ende des Entkohlungszeitraumes abgestimmt wird, wobei der kritische Entkohlungszeitpunkt ($t'_{crit}$) berechnet wird durch:

$$t = t'_{crit} \quad \text{wenn } CP(t) \geq CPP \text{ und } CP(t) = (N_2)^{\wedge}n \,/\, (CO)^{\wedge}m$$

wobei

CPP = Grenzwertparameter,
$CP = (N_2)^{\wedge}n \,/\, (CO)^{\wedge}m$ für Konverter mit Spalt und niedrige CO-Nachverbrennung,
$CP = (N_2/CO_2)^{\wedge}s$ für Konverter ohne Spalt und hohe CO-Nachverbrennung, und das $O_2$-Blasende ($t'_{EoB}$) berechnet wird durch:

$$t = t'_{EoB} \quad \text{wenn } EoB(t) \geq EoBP1 \text{ und } EoB = (CO+CO_2) - r\,PC$$

wobei

$PC = CO_2/(CO+CO_2)\,100$ = Nachverbrennung in %
mit
CO: Kohlenmonoxidgehalt im Abgas %
$CO_2$: Kohlendioxidgehalt im Abgas %
und
EoBP1 = Grenzwertparameter,
r = Abstimmungsparameter

Das Blasende entspricht dem Zeitpunkt, an dem der Gradient der Funktion "E-oB" eine definierte Wertigkeit überschreitet. Die Konstante "r" der Funktion verstärkt das Signal und erhöht die Signalempfindlichkeit. Die physikalische Auslegung dieses verstärkten Signals bedeutet ein Ende der CO-Nachverbrennung im Konvertergefäß.

Die Parameter in den Gleichungen für den kritischen Entkohlungszeitpunkt und für das $O_2$-Blasende sind abhängig von der Konverterbauweise und insbesondere von der Verfügbarkeit der Spaltverstellung und sind in regelmäßigen Abständen abzustimmen. Voraussichtliche Abstimmbereiche sind:

$$n = 6 - 7$$

$$m = 3 - 6$$

$$s = 3 - 4$$

$$r = 0 - 5$$

Der kritische Entkohlungszeitpunkt entspricht demjenigen Zeitpunkt, an dem der Gradient der Funktion "CP" eine definierte Wertigkeit überschreitet, d. h. die Entkohlungskinetik wechselt aus dem Zustand eines Sauerstoffdefizits für die Kohlenstoffoxidation in einen Zustand des Sauerstoffüberschusses. Die physikalische Auslegung dieses verstärkten Signals bedeutet den Beginn einer verringerten Entkohlung, ausgedrückt durch einen kontinuierlichen Anstieg des Stickstoffgehalts und eine Absenkung des Kohlenmonoxidgehalts im Abgas. Der Zustand vor diesem Zeitpunkt charakterisiert die quasi konstante Entkohlungsgeschwindigkeit der Hauptentkohlungsphase und ist direkt proportional zur Menge des verblasenen Sauerstoffs. Nach dem kritischen Entkohlungszeitpunkt wird die Entkohlungsgeschwindigkeit durch ein Reaktionspotential gesteuert, das durch eine Differenz zwischen dem aktuellen Kohlenstoffgehalt und seinem thermodynamischen Gleichgewicht ausgedrückt wird. Diese Entkohlungsgeschwindigkeit zeigt dabei einen exponentiellen Trend. Die abgesenkte Entkohlungsrate führt in Abhängigkeit von der Differenz zwischen aktuellem Kohlenstoffgehalt und dessen thermodynamischem Gleichgewicht zu einem niedrigeren Reaktionspotential. Es handelt sich um eine Funktion der aktuellen chemischen Zusammensetzung des Metalls und seiner Temperatur. Exponenten der Funktion verstärken das Signal und erhöhen die Signalempfindlichkeit bei allen Signaländerungen.

Der Gradient der Funktion "CP" ist dabei für

Konverter mit Spalt und niedriger CO-Nachverbrennung:

$$CP = (N_2)^n/(CO)^m$$

mit

$N_2$ = der Stickstoffgehalt in % im Abgas.

Bei Nichtverfügbarkeit lässt sich $N_2$ berechnen zu

$$N_2 = 100 - O_2\text{-}CO\text{-}CO_2$$

und für Konverter ohne Spalt und hoher CO-Nachverbrennung:

$$CP = (N_2/CO_2)^s$$

Durch eine unterstützende Berechnung wird in Abhängigkeit von den unterschiedlichen Signalpegeln der Abgasanalyse eine Erfassung des Abfangkohlenstoffgehaltes im Metallbad ermöglicht, bei dem durch einen Sauerstoffblastopp ein bestimmter, gewünschter Endkohlenstoffgehalt erzielbar ist. Durch Kombination des kritischen Entkohlungszeitpunktes mit dem $O_2$-Blasende wird zudem eine Definition des Zeitintervalls, das einem Kohlenstoffgehalt im Metallbad nach dem kritischem Entkohlungszeitpunkt zugeordnet wird, erhalten.

Das Verfahren ist folgendem Ablauf zuzuordnen:

Wenn t=t´crit

$$t: t´crit + \Delta t \ \rightarrow C_f (t´crit + \Delta t \ )$$

$$t: t´crit + 2\Delta t \ \rightarrow C_f (t´crit + 2\Delta t \ )$$

.

.

.

$$t: t´crit + n\Delta t \ \rightarrow C_f (t´crit + n\Delta t \ )$$

wobei

$\Delta t = (t_f - t´crit)/n$ = statistisch auszuwertendes Zeitintervall.

Schließlich wird durch eine unterstützende Berechnung der restlichen Entkohlungszeit, basierend auf dem kritischen Kohlenstoffgehalt, eine Abschätzung des zu verblasenden Restsauerstoffs durchgeführt.

Das für das erfindungsgemäße Verfahren verwendete Messsystem sollte auf mindestens den drei grundlegenden Abgasbestandteilen: Sauerstoff, Kohlenmonoxid und Kohlendioxid beruhen, wobei Stickstoff- und Restgasanteile die Gasbilanz vervollständigen. Bei einer konventionellen Messung errechnet sich Stickstoff als Rest zu 100 %; Wasserstoff sowie alle anderen Bestandteile werden vernachlässigt. Bei Einsatz eines Massenspektrometers stehen alle wesentlichen Bestandteile des Abgases direkt aus der Messung zur Verfügung. Empirische Größen, die in analytischen Funktionen als spezielle Kombination der Bestandteile ausgedrückt werden, verfolgen als definiertes Moment das Verhalten der verschiedenen Trends, die für die Erfassung des kritischen Entkohlungszeitpunktes und des Blasendes bedeutsam sind.

Die grob gemessenen Werte von Menge und Zusammensetzung des Abgases, die von den entsprechenden Geräten des verwendeten Messsystems empfangen werden, sind vor ihrer Verwendung in Bilanzierungsrechnungen teilweise aufzubereiten, um so die Signal-Schwankungen zu glätten, für einen korrekten Bezug der verschiedenen Datenpunkte zum entsprechenden Zeitpunkt zu sorgen und um einige quantitative Korrekturparameter anzuwenden.

Bei dem Glätten der Signal-Schwankungen handelt es sich um ein übliches mathematisches Verfahren, das bei mehreren Mengen angewandt wird. Zur Vollständigkeit der Parameterbezüge ist die Glättung in den nachfolgenden Formeln angegeben. Zur Kurzbezeichnung wird durch Definition des Ausdrucks ein Glättungsoperator $X = smooth(X, \tau)$ eingeführt als:

$$x(k+1) = \frac{x(k)\tau + u(k)\Delta t}{\tau + \Delta t}$$

wobei

u(k) = eine ungefilterte Messwertserie eines Signals in Zeit t mit Zeitabständen von $\Delta t$, typischerweise eine Sequenz aus Messwerten
x(k+1) = das entsprechende geglättete Signal,
$\tau$ = ein mittlerer Zeitintervallparameter, der das Ausmaß der Glättung bestimmt.

Im Falle einer Doppelglättung, wobei der Glättungsvorgang zweimal erfolgt, lautet die Bezeichnung $X = glatt^2(X, \tau)$.

Das Abgasmesssystem liefert üblicherweise Signale mit einer Abtastzeit von 0,3 - 0,5 Sekunden. Diese Signale dienen zur Bildung unterschiedlicher spezieller Unterstützungs- und Regelsignale. Zum Zweck ihrer Glättung lässt sich folgendes Filterverfahren einsetzen:

$$x(k+1) = a\,x(k) + (1-a)\,u(k)$$

wobei k = 0, 1, 2 ...... wobei

x(k) = geglättetes Signal "x" zum Zeitpunkt k
x(k+1) = geglättetes Signal "x" zum Zeitpunkt k+1
u (k) = gemessenes Signal "x" zum Zeitpunkt k

und mit den Parametern

$$a = N/(N+1) \qquad a \in [0,1]$$

$$1-a = 1/(N+1)$$

wobei

N = Anzahl der während des Glättungsvorganges abgetasteten Signalwerte.

Bedingt durch die im Bereich von 15 - 20 Sekunden liegende Verzögerung der im Abstand von einer Sekunde bei einer Abtastzeit von 0,3 - 0,5 Sekunden erfassten Abgaswerte sind diese für die Erfassung des kritischen Entkohlungszeitpunktes und für den Zeitpunkt des Blasendes und deren Differenz statistisch auszuwerten.

Das erfindungsgemäße Verfahren zeichnet sich durch folgenden ineinander greifenden Betriebsablauf aus:

A) Prozessmodell mit statischer Prozessberechnung und Definition von:

- $O_2$-Menge, Blasmodell, Art des Spülgases, Spülgasmodell, Lanzenabstand
- Zugabe von Schlackebildnern
- Zugabe von Kühlstoffen.

B) vom Prozessmodell unabhängiges Submodell mit dynamischer Prozessbeobachtung von

- Abgasmodell (PC, CP, EoB)
- CP = kritischer Entkohlungszeitpunkt
- EoB = Blasendezeitpunkt

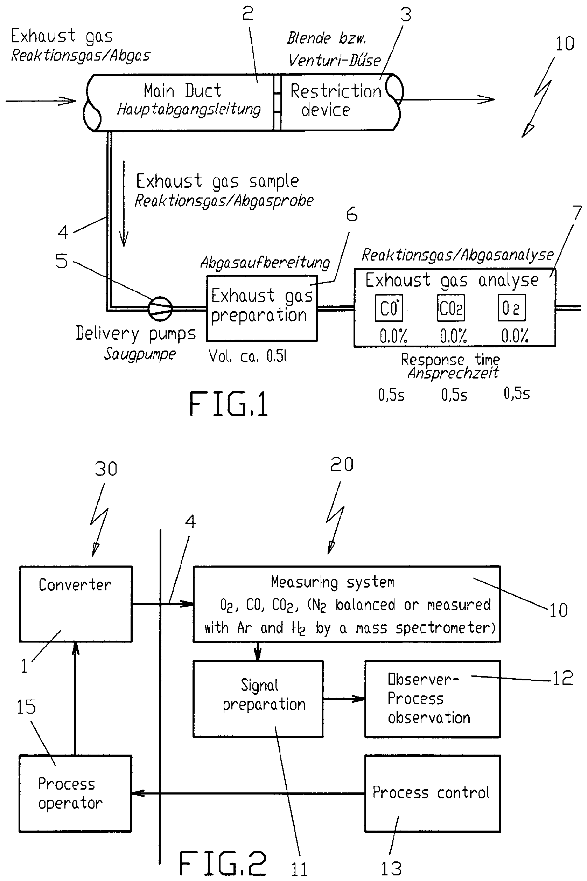

Nachfolgend wird an Ausführungsbeispielen der Aufbau eines Abgas-Messsystems (Figur 1) und eine allgemeine Übersicht des erfindungsgemäßen Regelkreises eines Konverters (Figur 2) dargestellt.

Die Figur 1 zeigt in einem Flussdiagramm ein konventionelles Messsystem 10 mit in Reihe geschalteten Analysegeräten 7 - es besteht auch die Möglichkeit einer Parallelschaltung - für die Bestimmung von CO, $CO_2$ und $O_2$. Dem Abgas des Konverters 1 (Fig. 2) wird vor einer Blende bzw. Venturi-Düse 3 in der Abgasleitung 2 mittels einer Saugpumpe 5 eine Abgasprobe 4 von etwa 0,5 Liter entnommen und einer Abgasaufbereitung 6 zugeführt. Von dort gelangt die Abgasprobe 4 hintereinander in die in Reihe geschalteten Analysegeräten 7, worin mit einer Ansprechzeit von jeweils 0,5 Sekunden ein dem Analysenwert entsprechendes Signal erzeugt wird.

In der Figur 2 ist schematisch der erfindungsgemäße Regelkreis für einen Konverter 1 dargestellt. Der Regelkreis besteht aus den Teilbereichen erfindungsgemäße Prozessbeobachtung und -führung 20 (in der Zeichnungsfigur rechts) mit Messsystem 10, Signalaufbereitung 11, Submodell als Prozessbeobachter 12 und Prozesskontrolle 13 sowie dem konventionellen Prozessablauf 30 (in der Zeichnungsfigur links) mit Konverter 1 und Prozesssteuerung bzw. - bedienung 15.

Die Abgasproben 4 des Konverters 1 werden im Messsystem 10 analysiert (siehe Fig. 1) und die erhaltenen, den Analysenwerten entsprechenden Signale in der Signalaufbereitung 11 so aufbereitet, dass daran anschließend vom Submodell 12 die das ursprüngliche Prozessmodell korrigierenden Daten in die Prozesskontolle bzw. -führung 13 zur Prozesssteuerung bzw. -bedienung 15 einfließen.

Bezugszeichenliste

1 Konverter
2 Abgasleitung vom Konverter
3 Blende bzw. Venturi-Düse
4 Abgasprobe
5 Saugpumpe
6 Abgasaufbereitung
7 Analysegeräte
10 Messsystem
11 Signalaufbereitung
12 Submodell als Prozessbeobachter
13 Prozesskontrolle
15 Prozesssteuerung
20 Prozessbeobachtung und -führung
30 Prozessablauf

**Patentansprüche**

**1.** Verfahren zur dynamischen Steuerung des Konverterprozesses beim Verblasen des Sauerstoffs bei der Stahlherstellung mittels Abgasanalysen mit Hilfe eines Prozessmodells mit statischer Prozessberechnung und mit Hilfe eines vom Prozessmodell unabhängigen Submodells mit dynamischer Prozessbeobachtung, das auf der Abgasanalyse basierend als Prozessbeobachter arbeitet, wobei das Prozessmodell und das Submodell Bestandteil eines Regelkreises sind, dereine Prozessbeobachtung und -führung (20) mit Messsystem (10), eine Signalaufbereitung (11), das Submodell als Prozessbeobachter (12) und eine Prozesskontrolle oder Prozessführung (13) sowie einen Prozessablauf (30) mit Konverter (1) und Prozesssteuerung oder Prozessbedienung (15) umfasst und in welchem mindestens die Abgasbestandteile $O_2$, CO und $CO_2$ umfassende Abgasproben (4) des Konverters (1) im Messsystem (10) analysiert und die erhaltenen, den Analysewerten entsprechenden Signale in der Signalaufbereitung (11) aufbereitet werden und daran anschließend das ursprüngliche Prozessmodell mit statischer Prozessberechnung korrigierende Daten vom Submodell (12) in die Prozesskontrolle oder Prozessführung (13) zur Prozesssteuerung oder Prozessbedienung (15) einfließen, wobei mit Hilfe des vom Prozessmodell unabhängigen Submodells durch eine sinnvolle Kombination der erhaltenen Bestandteilssignale Erfassungswerte für den kritischen Entkohlungszeitpunkt ($t'_{crit}$) und für das $O_2$-Blasende ($t'_{EoB}$) berechnet werden, durch die der durch das Prozessmodell vorausberechnete Sauerstoffgehalt zu Prozessbeginn korrigiert und auf die tatsächlichen Bedingungen gegen Ende des Entkohlungszeitraumes abgestimmt wird, wobei der kritische Entkohlungszeitpunkt ($t'_{crit}$) ausgedrückt wird durch:

$$t = t'_{crit} \qquad \text{wenn } CP(t) \geq CPP \text{ und } CP\,(t) = (N_2)\hat{\;}n\,/\,(CO)\hat{\;}m$$

wobei

CPP = Grenzwertparameter,
CP = $(N_2)\hat{\;}n\,/\,(CO)\hat{\;}m$ für Konverter mit Spalt und niedrige CO- Nachverbrennung,
CP = $(N_2/CO_2)\hat{\;}s$ für Konverter ohne Spalt und hohe CO-Nachverbrennung sind
und das $O_2$-Blasende ($t'_{EoB}$) ausgedrückt wird durch:

$$t = t'_{EoB} \qquad \text{wenn } EoB\,(t) \geq EoBP1 \text{ und } EoB = (CO+CO_2) - r\,PC$$

wobei

Nachverbrennung in % = PC = $CO_2/(CO+CO_2)$ 100
und EoBP1 = Grenzwertparameter
sind
und die Parameter in den Gleichungen für den kritischen Entkohlungszeitpunkt und für das $O_2$-Blasende abhängig von der Konverterbauweise und insbesondere von der Verfügbarkeit der Spaltverstellung sind und in regelmäßigen Abständen abzustimmen sind, wobei die Abstimmbereiche n = 6 - 7; m = 3 - 6; s = 3 - 4; r = 0 - 5 sind.

2. Verfahren nach Anspruch 1, **dadurch gekennzeichnet, dass** in Abhängigkeit von den unterschiedlichen Signalpegeln der Abgasanalyse durch eine unterstützende Berechnung eine Erfassung des Abfangskohlenstoffgehaltes im Metallbad durchgeführt wird, bei dem durch einen Sauerstoffblasstopp ein bestimmter, gewünschter Endkohlenstoffgehalt erzielt wird, wobei durch Kombination des kritischen Entkohlungszeitpunktes mit dem $O_2$-Blasende eine Definition des Zeitintervalls, das einem Kohlestoffgehalt im Metallbad nach dem kritischem Entkohlungszeitpunkt zugeordnet wird, erhalten wird.

3. Verfahren nach Anspruch 1 oder 2, **dadurch gekennzeichnet, dass** durch eine unterstützende Berechnung der restlichen Entkohlungszeit, basierend auf dem kritischen Kohlenstoffgehalt, eine Abschätzung des zu verblasenden Restsauerstoffs durchgeführt wird.

4. Verfahren nach einem der vorhergehenden Ansprüche, **dadurch gekennzeichnet, dass** die von den entsprechenden Geräten empfangenen, grob gemessenen Werte der Abgasanalyse vor ihrer Verwendung in Bilanzierungsrechnungen zur Glättung der Signal-Schwankungen der gemessenen Menge und Zusammensetzung des Abgases teilweise aufbereitet werden, um einen korrekten Bezug der verschiedenen Datenpunkte für einen bestimmten Zeitpunkt und um einige quantitative Korrekturparameter zu erhalten, wobei zur Kurzbezeichnung ein Glättungsoperator *X = smooth(X, τ)* eingeführt wird und folgende Formeln verwendet werden:

$$\text{Glättungsoperator} \quad x(k+1) = \frac{x(k)\tau + u(k)\Delta t}{\tau + \Delta t}$$

bzw. im Falle einer Doppelglättung, wobei der Glättungsvorgang zweimal erfolgt

$$X = \text{smooth}^2 ( X, \tau )$$

wobei

u(k) = eine ungefilterte Messwertserie eines Signals in Zeit t mit Zeitabständen von $\Delta t$, typischerweise eine Sequenz aus Messwerten
x(k+1) = das entsprechende geglättete Signal,
$\tau$ = ein mittlerer Zeitintervallparameter, der das Ausmaß der Glättung bestimmt, sind.

**5.** Verfahren nach Anspruch 4, **dadurch gekennzeichnet, dass** zum Zweck der Glättung der vom Abgasmesssystem mit einer Abtastzeit von 0,3 - 0,5 Sekunden gelieferten Signale, die zur Bildung unterschiedlicher spezieller Unterstützungs- und Regelsignale dienen, folgendes Filterverfahren eingesetzt wird:

$$x(k+1) = a\, x(k) + (1-a)\, u(k)$$

wobei k = 0, 1, 2
wobei

x(k): geglättetes Signal "x" zum Zeitpunkt k
x(k+1): geglättetes Signal "x" zum Zeitpunkt k+1
u (k): gemessenes Signal "x" zum Zeitpunkt k

und

a: Parameter = N/(N+1) a $\in$ [0,1]
1 -a: Parameter = 1/(N+1)
N: Anzahl der während des Glättungsvorganges abgetasteten Signalwerte

sind.

## Claims

1. A method for dynamic control of the converter process in the blowing of oxygen in steel-making by means of exhaust gas analyses with the help of a process model with static process computation and with the help of a sub-model, which is independent of the process model, with dynamic process observation, which operates as a process observer based on waste gas analysis, wherein the process model and the sub-model are components of a regulating circuit which comprises process observation and management (20) with a measuring system (10), signal preparation (11), the sub-model as process observer (12), and process checking or process management (13), as well as a process procedure (30) with a converter (1) and process control or process operation (15), and in which waste gas samples (4), which comprise at least the waste gas constituents $O_2$, CO and $CO_2$, of the converter (1) are analysed in the measuring system (10), and the obtained signals, which correspond with the analytical values, are prepared in the signal preparation (11), and subsequently thereto data correcting the original process model by static process computation flow from the sub-model (12) into the process control or management (13) for process control or process operation (15), wherein with the help of the sub-model, which is independent of the process model, computation is carried out, through a feasible combination of the obtained constituent signals, of detection values for the critical decarburisation instant (t'$_{crit}$) and for the end of $O_2$ blowing (t'$_{EoB}$), by which the oxygen content predicted by the process model is corrected at the start of the process and adapted to the actual conditions towards the end of the decarburisation period, wherein the critical decarburisation time (t'$_{crit}$) is expressed by:

$$t = t'_{crit} \qquad \text{when } CP(t) \geq CPP \text{ and } CP(t) = (N_2)^{\wedge}n \, / \, (CO)^{\wedge}m$$

wherein

CCP = limit parameter,
CP = $(N_2)^{\wedge}n \, / \, (CO)^{\wedge}m$ for converters with a gap and low CO post-combustion,
CP = $(N_2/CO_2)^{\wedge}s$ for converters without a gap and high CO post-combustion,
and the end of $O_2$ blowing ($t'_{EoB}$) is expressed by:

$$t = t'_{EoB} \qquad \text{when } EoB(t) \geq EoBP1 \text{ and } EoB = (CO + CO_2) - rPC$$

wherein

post-combustion in %= PC = $CO_2/(CO + CO_2)$ 100
and EoBP1 = limit parameter,
and the parameters in the equations for the critical decarburisation instant and for the end of $O_2$ blowing
are dependent on the converter design and particularly on the availability of gap adjustment and are to be
adapted at regular intervals, wherein the adjustment ranges are n = 6 - 7; m = 3 - 6; s = 3 - 4; r = 0 - 5.

2. Method according to claim 1, **characterised in that** detection of the captured carbon content in the metal bath, in which a specific desired final carbon content is achieved by stopping oxygen blowing, is carried out through a supporting calculation in dependence on the different signal levels of the waste gas analysis, wherein through combination of the critical decarburisation instant with the end of $O_2$ blowing a definition is obtained of the time interval associated with a carbon content in the metal bath after the critical decarburisation instant.

3. Method according to claim 1 or claim 2, **characterised in that** an estimation of the remaining oxygen to be blown is carried out by a supporting calculation of the remaining decarburisation time on the basis of the critical carbon content.

4. Method according to any one of the preceding claims, **characterised in that** the roughly measured values of the waste gas analysis, which are received from the appropriate instruments, are partly processed before use thereof in balancing calculations to smooth signal fluctuations of the measured quantity and composition of the waste gas, so as to obtain a correct relationship of the various data points for a specific instant and to obtain some quantitative correction parameters, wherein a smoothing operator $X = smooth(X, \tau)$ is introduced for abbreviated designation and the following formulae are used: smoothing operator

$$x(k+1) = \frac{x(k)\tau + u(k)\Delta t}{\tau + \Delta t}$$

or, in the case of a double smoothing in which the smoothing process is carried out twice: $X = smooth^2 (X, \tau)$.
wherein

u(k) = an unfiltered series of measurement values of a signal in time t with time intervals of $\Delta t$, typically a sequence of measured values,
x(k+1) = the corresponding smoothed signal,
$\tau$ = an average time interval parameter which determines the degree of smoothing.

5. Method according to claim 4, **characterised in that** for the purpose of smoothing the signals supplied by the waste gas measurement system with a scanning time of 0.3 to 0.5 seconds, which serve to form different specific support signals and regulating signals, the following filtering method is used:

$$x(k+1) = a \, x(k) + (1-a) \, u(k),$$

wherein k = 0, 1, 2
wherein

x(k): smoothed signal 'x' at instant k
x(k+1): smoothed signal 'x' at instant k+1
u(k): measured signal 'x' at instant k and
a: parameter = N/(N+1) a $\in$ [0, 1]
1-a: parameter = 1/(N+1)
N: number of signal values scanned during the smoothing procedure.

**Revendications**

1. Procédé pour la commande dynamique du processus de conversion lors de l'insufflation d'oxygène au cours de la fabrication d'acier au moyen d'analyses des gaz d'échappement à l'aide d'un modèle de processus avec évaluation statique du processus et à l'aide d'un modèle secondaire indépendant du modèle de processus avec observation dynamique du processus, qui travaille à titre d'observateur du processus en se basant sur l'analyse des gaz d'échappement, dans lequel le modèle de processus et le modèle secondaire représentent des éléments constitutifs d'un circuit de commande qui comprend une observation et un guidage du processus (20) comprenant un système de mesure (10), un traitement des signaux (11), le modèle secondaire à titre d'observateur du processus (12) et un contrôle du processus ou un guidage du processus (13), ainsi qu'un déroulement du processus (30) comprenant un convertisseur (1) et une commande du processus ou une exploitation du processus (15) et dans lequel des échantillons des gaz d'échappement (4) du convertisseur (1) comprenant au moins les constituants de gaz d'échappement, à savoir $O_2$, CO et $CO_2$ sont analysés dans le système de mesure (10) et les signaux obtenus correspondant aux valeurs d'analyse sont traités dans le traitement des signaux (11), et d'une manière qui s'y raccorde directement, des données du modèle secondaire (12) corrigeant le modèle de processus initial avec évaluation statique du processus sont alimentées dans le contrôle du processus ou le guidage du processus (13) pour la commande du processus ou l'exploitation du processus (15), dans lequel, à l'aide du modèle secondaire indépendant du modèle de processus, via une combinaison appropriée des signaux constitutifs obtenus, on calcule des valeurs d'enregistrement pour le moment critique de décarburation ($t'_{crit}$) et pour la fin du soufflage de $O_2$ ($t'_{EoB}$), par lesquelles la teneur en oxygène calculée au préalable par le modèle de processus est corrigée au début du processus et est synchronisée en prenant en compte les conditions réelles à la fin de la période de décarburation, dans lequel le moment critique de décarburation ($t'_{crit}$) est exprimé par :

$$t = t'_{crit} \qquad \text{lorsque } CP(t) \geq CPP \text{ et } CP(t) = (N_2)\hat{}n/(CO)\hat{}m$$

où

CPP représente les paramètres de valeurs-limites ;
CP = $(N_2)$^n/(CO)^m pour des convertisseurs à écartement et à faible postcombustion de CO ;
CP = $(N_2/(CO_2)$^s pour des convertisseurs sans écartement et à forte postcombustion de CO ;
et la fin du soufflage de $O_2$ ($t'_{EoB}$) est exprimée par :

$$t = t'_{EoB} \qquad \text{lorsque } EoB(t) \geq EoBP1 \text{ et } EoB = (CO + CO_2) - rPc$$

où

$$\text{postcombustion en } \% = PC = CO_2/(CO + CO_2)\ 100$$

et EoBP1 représente les paramètres de valeurs-limites ;
et les paramètres dans les équations pour le moment critique de décarburation et pour la fin du soufflage de $O_2$ dépendent de la conception du convertisseur et en particulier de la possibilité du réglage de l'écartement doivent être synchronisés dans des intervalles réguliers, dans lequel les plages de synchronisation sont : n 6 - 7 ; m = 3 - 6 ; s = 3 - 4 ; r = 0 - 5.

**2.** Procédé selon la revendication 1, **caractérisé en ce que**, en fonction des différents niveaux de signaux de l'analyse des gaz d'échappement, via un calcul de soutien, on procède à un enregistrement de la teneur en carbone visée dans le bain de métal fondu, à laquelle, via un arrêt du soufflage de l'oxygène, on obtient une teneur finale désirée déterminée en carbone, dans lequel, par combinaison du moment critique de décarburation avec la fin du soufflage de $O_2$, on obtient une définition de l'intervalle de temps qui est attribué à une teneur en carbone dans le bain de métal fondu après le moment critique de décarburation.

**3.** Procédé selon le revendication 1 ou 2, **caractérisé en ce que**, via un calcul de soutien du temps de décarburation résiduel, en se basant sur la teneur critique en carbone, on met en oeuvre une évaluation de l'oxygène résiduel à insuffler.

**4.** Procédé selon l'une quelconque des revendications précédentes, **caractérisé en ce qu'**on traite en partie les valeurs de l'analyse des gaz d'échappement, grossièrement mesurées, reçues à partir des appareils correspondants; avant leur utilisation dans des calculs de comptabilisation pour le lissage des fluctuations de signaux de la quantité mesurée et de la composition des gaz d'échappement, afin d'obtenir un rapport correct des différents points de données pour un moment déterminé et afin de d'obtenir un certain nombre de paramètres de correction quantitatifs, dans lequel, pour le dire brièvement, on introduit un opérateur de lissage $X = smooth(X, \tau)$ et on utilise les formules suivantes :
opérateur de lissage :

$$x(k + 1) = \frac{x(k)\tau + u(k)\Delta t}{\tau + \Delta t}$$

respectivement, dans le cas d'un lissage doublé dans lequel le processus de lissage se déroule à deux reprises :

$$X = smooth^2(X, \tau)$$

où

u(k) représente une série de valeurs de mesure non filtrées d'un signal dans le temps t avec des intervalles de temps de $\Delta t$, de manière spécifique une séquence de valeurs de mesure ;
x(k + 1) représente le signal lissé correspondant ;
$\tau$ représente un paramètre d'intervalle de temps moyen qui détermine la mesure du lissage.

**5.** Procédé selon la revendication 4, **caractérisé en ce que**, pour le lissage des signaux fournis par le système de mesure des gaz d'échappement avec un temps de détection de 0,3 à 0,5 seconde, qui servent à la formation de différents signaux spécifiques de soutien et de réglage, on met en oeuvre le procédé de filtration suivant :

$$x(k + 1) = a\,x(k) + (1 - a)\,u(k) \text{ où } k = 0, 1, 2$$

dans lequel:

x(k) représente le signal "x" lissé au moment k ;
x(k + 1) représente le signal "x" lissé au moment k + 1 ;
u(k) représente le signal "x" mesuré au moment k ;
et
a représente le paramètre N/(N + 1) a $\varepsilon$ [0, 1] ;
1 - a représente le paramètre 1/(N + 1) ;
N représente le nombre des valeurs de signaux détectés au cours du processus de lissage.

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2839316 A1
- WO 2008049673 A1
- WO 2009030192 A1
- EP 572848 A

**In der Beschreibung aufgeführte Nicht-Patentliteratur**

- *Stahl u Eisen,* 1993, vol. 113 (6), 55-60